# EUROPÄISCHE PATENTSCHRIFT

(11) **EP 1 140 370 B1**
(45) Veröffentlichungstag und Bekanntmachung des Hinweises auf die Patenterteilung: **24.05.2006**
(21) Anmeldenummer: 99965538.4
(22) Anmeldetag: 22.12.1999
(51) Int. Cl.: B05C 17/005

(54) **GERÄT ZUM AUSBRINGEN VON FLIESSFÄHIGEN MASSEN**
DEVICE FOR DISCHARGING FLOWABLE MATERIALS
APPAREIL POUR DISTRIBUER DES MATIERES COULANTES

(30) Priorität: 23.12.1998 DE 29822967 U
(43) Veröffentlichungstag der Anmeldung: 10.10.2001
(73) Patentinhaber: 3M ESPE AG, 82229 Seefeld (DE)
(72) Erfinder: WAGNER, Ingo, D-82211 Herrsching (DE); BRANDHORST, Gerd, D-86899 Landsberg (DE); BEUSCHEL, Martin, D-80639 München (DE)
(86) Internationale Anmeldenummer: PCT/EP1999/010316
(87) Internationale Veröffentlichungsnummer: WO 2000/038841

(56) Entgegenhaltungen:
- EP-A- 0 699 582
- EP-A- 0 791 403

## Beschreibung

Ein Gerät zum Ausbringen von fließfähigen Massen mit den im Oberbegriff des Anspruchs 1 angegebenen Merkmalen ist aus EP 0 492 413 A1 bekannt. Dort ist eine schalenförmige Aufnahme zum Einlegen zweier Kartuschen in paralleler Ausrichtung vorgesehen, die an ihren hinteren Enden mit jeweils einem Ausbringkolben und an ihren vorderen Enden mit jeweils einer Öffnung zum Ankoppeln an die hinteren Eintrittsöffnungen eines an dem Gerät vorhandenen Mischers versehen sind. Beim Ausbringvorgang werden die beiden Kolben synchron von einem Elektromotor vorgeschoben, der gleichzeitig einen in dem Mischer vorhandenen Rotor antreibt.

Die Vorschubgeschwindigkeit der Kolben und gegebenenfalls auch die Antriebsgeschwindigkeit des Mischerrotors können von den Eigenschaften, beispielsweise der Viskosität oder der Empfindlichkeit gegen mechanische Kräfte, der in den Kartuschen enthaltenen Substanzen abhängen. Die richtigen Ausbringparameter sind von der Bedienungsperson auszuwählen. Bei Vorgabe ungeeigneter Parameter könnte es zu unerwünschten Veränderungen der auszubringenden Substanz und/oder zu Beschädigungen des Gerätes kommen.

Manche Substanzen verändern ihre Eigenschaften im Laufe der Zeit und sind daher vor einem vom Hersteller angegebenen Verfallsdatum zu verbrauchen. Dies gilt insbesondere für miteinander reagierende Komponenten, die zur Herstellung einer gebrauchsfähigen Masse miteinander gemischt werden. Beachtet die Bedienungsperson das Verfallsdatum nicht, so ist die von dem Gerät ausgebrachte Masse möglicherweise unbrauchbar oder zumindest in ihren Eigenschaften verschlechtert.

Schließlich kommt es darauf an, daß die jeweilige Kartusche ordnungsgemäß in die Aufnahme des Gerätes eingelegt wird. Ist dies nicht der Fall, so ist der Eintritt des Kolbens in die Kartusche und/oder der Eingriff der Mischerwelle in den Mischer nicht einwandfrei gewährleistet, was zu Beschädigungen des Gerätes, zum Ausbringen ungemischter Massen oder auch zu Undichtigkeiten führen kann. Auch insofern verläßt man sich herkömmlich auf die Bedienungsperson, daß sie die Kartuschen ordnungsgemäß einlegt.

Aus DE 39 19 105 A1 ist eine Klebemaschine bekannt, bei der Kassetten mit Kleberkomponenten in einem vorgegebenen Mischungsverhältnis gefüllt sind. Anhand einer sichtbaren Markierung kann der Benutzer erkennen, ob die Maschine entsprechend dem Mischungsverhältnis richtig bestückt wurde. Erwähnt sind ferner eine "pneumatische" Kodierung und eine Blockierung der Klebemaschine beim Einsetzen falscher Kassetten.

Der Erfindung liegt die Aufgabe zugrunde, eine fehlerhafte Bedienung einer solchen Ausbringvorrichtung, insbesondere das fehlerhafte Einlegen eines Behälters oder das Einlegen eines ungeeigneten Behälters, gegebenenfalls auch den Einsatz eines ungeeigneten Mischers, zu verhindern.

Die erfindungsgemäße Lösung dieser Aufgabe ist im Anspruch 1 gekennzeichnet. Die danach am Behälter vorgesehene Markierung und ihre Erfassung mittels einer im Gerät vorgesehenen Einrichtung sorgen dafür, daß der Entleermechanismus des Gerätes nur dann funktioniert, wenn die Markierung als zulässig erkannt worden ist, und gegebenenfalls in Abhängigkeit vom Inhalt der Markierung arbeitet. Die Markierung kann dabei Informationen über Eigenschaften des Behälterinhalts, seiner Haltbarkeit, des Herstellers und sonstige Angaben enthalten und außerdem zur Erfassung nicht nur des ordnungsgemäßen Einlegens des Behälters sondern auch des ordnungsgemäßen Betriebs des Gerätes herangeogen werden. Da Markierung und Erfassungseinrichtung aufeinander abgestimmt sein müssen, läßt sich auch erreichen, daß die Markierung nur dann gültig erkannt wird, wenn sich der Behälter in der vorgeschriebenen Position in der Aufnahme des Gerätes befindet.

Da die Markierung an einem in Abhängigkeit vom Innendruck verschiebbaren Behälterteil angeordnet ist, wird der Behälterinnendruck erfaßt, der beim Entleeren zu hoch werden kann, z.B. wenn versucht wird, falsche oder zu alte und daher verstrammte Pasten auszubringen, bei denen eine bestimmte maximale Förderkraft überschritten wird. Auf diese Weise lassen sich Schäden am Ausbringgerät, Verunreinigungen des Gerätes infolge Behälterbruch und sonstige Gefährdungen zuverlässig vermeiden. Auf diese Weise erübrigt sich die bei einigen herkömmlichen Geräten vorgesehene teuere Überlastkupplung.

Für die Anwendung vorteilhafte Ausführungen für Markierung und Erfassungseinrichtung sind in den Ansprüchen 3 bis 6 angegeben.

Die Weiterbildung der Erfindung nach Anspruch 7 betrifft die zweckmäßige Anordnung von Markierung und Erfassungseinrichtung am Behälter.

Die Ausgestaltung der Erfindung nach den Ansprüchen 8 und 9 erbringt den Vorteil, daß bei einem Misch- und Ausbringgerät für Zwei- oder Mehrkomponentengemische der Einsatz des richtigen Mischers gewährleistet ist.

Die Maßnahme des Anspruchs 10 ist insofern zweckmäßig, als bestimmte in der Markierung enthaltene Informationen, etwa ein Verfallsdatum, für den Anwender unmittelbar erkennbar werden.

Bevorzugte Ausführungsbeispiele der Erfindung werden nachstehend anhand der Zeichnung näher erläutert. Darin zeigt
- Figur 1: einen Längsschnitt durch den vorderen Teil eines Ausbringgerätes,
- Figur 2: eine perspektivische Darstellung einer den vorderen Behälterteil bildenden Kappe,
- Figur 3: eine der Figur 2 ähnliche perspektivische Darstellung einer Behälterkappe gemäß einem anderen Ausführungsbeispiel,
- Figur 4: einen Teil des auf die Anordnung nach Figur 3 abgestimmten Gerätes,
- Figur 5a bis 5c: schematische Darstellungen eines weiteren Ausführungsbeispiels eines Teils eines Ausbringgerätes mit einer Einrichtung zur Erfassung der Markierung eines Behälters, und
- Figur 6a bis 6c: den Figuren 5a bis 5c ähnliche Darstellungen eines wieder anderen Ausführungsbeispiels.

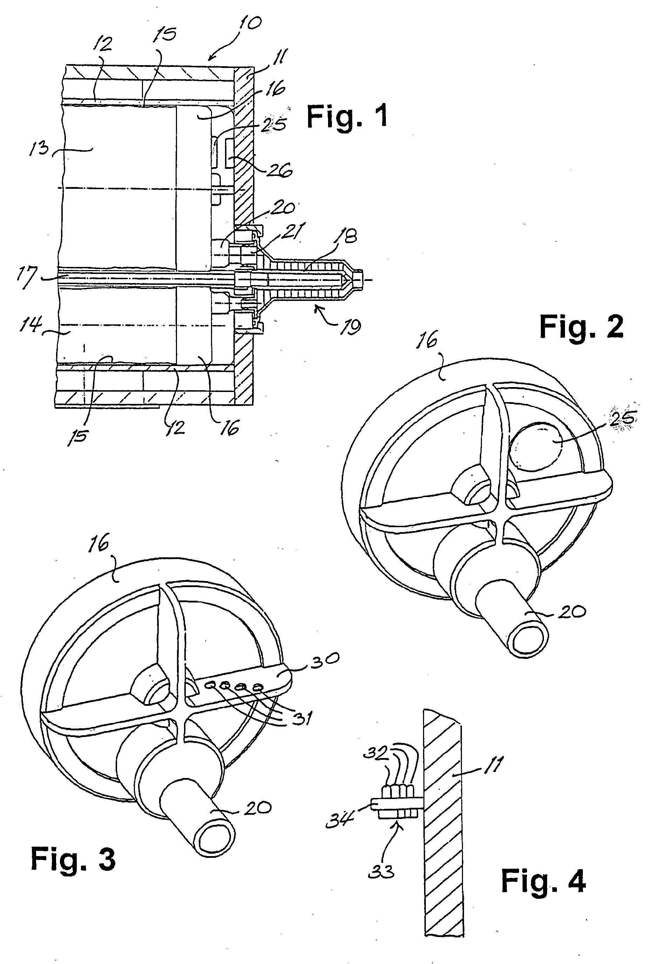

Das in Figur 1 teilweise dargestellte Ausbringgerät umfaßt ein Gehäuse **10** mit einer Stirnwand **11** und einer Aufnahme **12** für zwei parallel angeordnete, im wesentlichen zylindrische Behälter **13, 14.**

Im vorliegenden Fall bestehen die Behälter **13, 14** jeweils aus einem Schlauchbeutel **15,** dessen vorderes Ende in eine steife Kappe **16** eingeklebt ist. In Figur 1 ist nur der Behälter **13** mit verschiedenen Einzelheiten, der Behälter **14** dagegen nur schematisch dargestellt. Figur 2 zeigt eine perspektivische Darstellung der Kappe **16.**

Die Schlauchbeutel **15** der beiden Behälter **13, 14** werden durch (nicht gezeigte) Kolben entleert, die auf deren hintere Enden einwirken und von einem (ebenfalls nicht gezeigten) Elektromotor synchron vorgeschoben werden. Der Motor versetzt gleichzeitig eine Welle **17** in Drehung, deren vorderes Ende mit dem Rotor **18** eines mit den Behälterkappen **16** oder der Gehäusestirnwand **11** verbundenen dynamischen Mischers **19** gekoppelt ist. Jede Kappe **16** weist einen Austrittsstutzen **20** auf, der in einen entsprechenden, am hinteren Ende des Mischers **19** vorgesehenen Eintrittsstutzen **21** mündet.

An der vorderen Stirnseite der Kappe **16** ist ein Transponder **25** angeordnet, in dem auf den Behälter **13,** dessen Inhalt, das Verfallsdatum des Inhalts und/oder den Hersteller bezogenen Daten gespeichert sind. An einer dem Transponder **25** genau gegenüberliegenden Stelle der Gehäusestirnwand **11** ist eine Abfrageeinheit **26** angeordnet, die mit dem Transponder **25** zusammenarbeitet. Liegt der Behälter **13** in seiner vorgeschriebenen Stellung, in der sich der Transponder **25** nahe genug an der Abfrageeinheit **26** befindet, so werden die in dem Transponder **25** gespeicherten Daten von der Abfrageeinheit **26** empfangen, die bei Übereinstimmung mit in einer Gerätesteuerung vorgegebenen Daten das Ausbringgerät zur Betätigung freigibt. Die eigentliche Betätigung zum Antrieb der Ausbringkolben und der Mischerwelle **17** wird durch einen (nicht gezeigten) Schalter eingeleitet.

Enthalten die vom Transponder **25** auf die Abfrageeinheit **26** übertragenen Daten Informationen über die in dem Behälter **13** gespeicherte Substanz, so läßt sich auch die Vorschubgeschwindigkeit der Ausbringkolben und/oder die Drehgeschwindigkeit des Mischerrotors **18** entsprechend steuern.

Zusätzlich kann eine (nicht gezeigte) Einrichtung zur Erzeugung einer Anzeige aufgrund der vom Transponder **25** übertragenen Daten, etwa des Verfallsdatums, vorgesehen sein. Die Anzeigeeinrichtung kann als Display am Gerät oder als separates Bildschirmgerät gestaltet sein.

Der in Figur 1 gezeigte zweite Behälter **14** kann ebenso wie der Behälter **13** mit einem Transponder versehen sein, der mit einer entsprechend angeordneten weiteren Abfrageeinheit an der Stirnwand **11** des Gerätegehäuses **10** zusammenarbeitet. In diesem Fall läßt sich auch sicherstellen, daß die beiden Behälter zusammenpassende Komponenten zur Herstellung des gewünschten Gemisches enthalten.

In alternativer Ausgestaltung kann bei dem in Figur 1 dargestellten Ausbringgerät nur einer der beiden Behälter **13, 14** mit einem Transponder **25** und das Gerät mit einer einzelnen Abfrageeinheit **26** versehen sein. Ferner können der Transponder **25** und die Abfrageeinheit **26** auch an anderen Stellen als den in den Zeichnungen dargestellten angeordnet sein.

Die Erfindung beschränkt sich nicht auf Geräte zur Herstellung von Substanzen aus zwei oder mehreren Komponenten. Die Anordnung eines Transponders **25** an einem eine auszubringende Substanz enthaltenden Behälter **13** in Verbindung mit einer Abfrageeinheit **26** am Gerät ist auch dann sinnvoll, wenn es sich um ein reines Ausbringgerät handelt. In diesem Fall kann anhand der in dem Transponder **25** gespeicherten Daten z.B. die Ausbringgeschwindigkeit gesteuert und/oder der Gebrauch einer bereits verfallenen Substanz verhindert werden.

Anstelle des in Figur 1 und 2 angenommenen Transponders **25** kann die Markierung der Behälters auch in einem Magnetcode oder einem optisch lesbaren Strichcode an der Stirnwand der Kappe **16** enthalten sein, wobei der betreffende Code von einem entsprechenden magnetisch oder optisch arbeitenden Codeleser erkannt werden kann, der an der der Abfrageeinheit **26** in Figur 1 entsprechenden Stelle der Stirnwand **11** des Gehäuses **10** angeordnet ist.

In wieder einer anderen, in der Zeichnung nicht dargestellten Ausgestaltung kann die Markierung des Behälters bzw. Behälterinhalts in einem elektronischen Schaltungschip vorliegen, der wiederum an der Stelle des Transponders **25** in Figur 1 angeordnet ist und mit einer entsprechenden Abfrageeinheit **26** an der Stirnwand **11** des Gehäuses **10** zusammenarbeitet. In diesem Fall weist die Abfrageeinheit Kontaktelemente für den Schaltungschip sowie einen an diese Kontaktelemente angeschlossenen Prozessor auf.

Bei dem in Figur 3 und 4 gezeigten zweiten Ausführungsbeispiel der Erfindung sind an einer an der Kappe **16** nach vorne ragenden Rippe **30** Vertiefungen oder Löcher **31** angeordnet, in die bei vollständiger Einführung des Behälters **13** in das Gerät jeweils Betätigungsstifte **32** von Mikroschaltern **33** eintreten können, die an einem von der Gehäusestirnwand **11** nach hinten ragenden, zu der Rippe **30** parallel verlaufenden Steg **34** angeordnet sind.

In dem dargestellten Ausführungsbeispiel ist die Rippe **30** mit vier Löchern **31** versehen, die mit den Betätigungsstiften **32** von insgesamt vier Mikroschaltern **33** zusammenwirken. In diesem Fall wird beim Einlegen des Behälters **13** in Figur 4 von oben keiner der Mikroschalter **33** betätigt. Sind an der Rippe **30** nur einige der Löcher **31** vorhanden, so werden diejenigen Mikroschalter **33** betätigt, für deren Betätigungsstifte **32** kein Loch vorgesehen ist. Je nach der Anzahl der an der Rippe **30** vorhandenen Löcher **31** wird also eine andere Information übertragen.

Anstelle der in Figur 3 und 4 angenommenen, in der Rippe **30** der Kappe **16** vorgesehenen Löcher **31** können auch andere Oberflächenformationen ähnlich einem Schlüsselbart vorgesehen sein, in denen auf den Behälter **13** bzw. den Behälterinhalt bezogene Daten codiert sind. In diesem Fall weist das Gehäuse **10** entsprechende, diese Oberflächenformationen abtastende Federelemente auf, über deren Stellung die betreffende Information erfaßt wird.

Zusätzlich zu oder auch anstelle der an dem Behälter vorgesehenen Markierung kann eine (nicht gezeigte) Markierung auch an dem Mischer vorhanden sein, die mit der gleichen oder einer separaten, am Gerätegehäuse **10** angeordneten Auswerteinheit zusammenarbeitet, um sicherzustellen, daß der richtige Mischer **19** in Verbindung mit dem Gerät und/oder der auszubringenden Substanz verwendet wird. In diesem Fall ist die Gerätesteuerung so ausgelegt, daß sie den Betrieb des Gerätes nur dann freigibt, wenn beide Markierungen mit den in der Steuerung vorgegebenen Daten übereinstimmen.

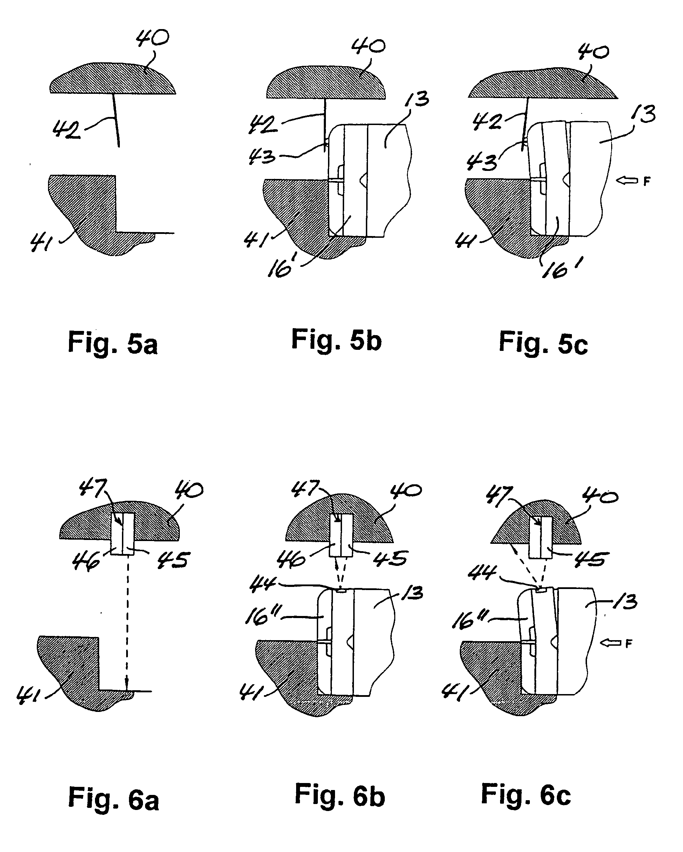

In Figur 5a bis 5c ist schematisch nur ein Teil der Umfangswand **40** sowie ein Teil der Stirnwand **41** der Behälteraufnahme eines Ausbringgerätes gezeigt. Dieses Gerät entspricht weitgehend dem in Figur 1 gezeigten Gerät, unterscheidet sich jedoch dadurch, daß von der Umfangswand **40** ein Taster **42** in Form eines verschwenkbaren Stiftes in den Aufnahmeraum für den Behälter **13** (Figur 5b) hineinragt.

In Figur 5a befindet sich der Taster **42** in der nach rechts vorgespannten Ruhelage, die er dann einnimmt, wenn kein Behälter in das Ausbringgerät eingelegt ist.

In der Darstellung der Figur 5b befindet sich ein Behälter **13** in seiner normalen Betriebslage. Der Behälter **13** weist an der Stirnfläche seiner Kappe **16'** einen Vorsprung **43** auf, der den Taster **42** gegenüber der in Figur **5a** gezeigten Stellung in Kolbenvorschubrichtung in seine normale Arbeitslage schwenkt. In dieser Stellung des Tasters **42** ist das Ausbringgerät betriebsbereit.

Wird der Behälter **13** nicht ordnungsgemäß in das Gerät eingelegt oder handelt es sich um einen Behälter, der nicht für das Gerät bestimmt ist und beim Betrieb Störungen verursachen kann, so wird der Taster **42** nicht aus seiner Ruhestellung ausgelenkt, und der Ausbringvorgang ist gesperrt.

Figur 5c zeigt den Fall, daß sich die Kappe **16'** des Behälters **13** infolge eines zu hohen Drucks verformt hat, so daß der Vorsprung **43** den Taster **42** über seine normale Arbeitslage in eine anomale Lage auslenkt. In dieser Stellung des Tasters **42** wird der Ausbringvorgang unterbrochen.

Eine derartige Verformung der Gehäusekappe **16'** kann dann auftreten, wenn versucht wird, falsche oder zu alte und daher verstrammte Pasten auszubringen, bei denen eine bestimmte maximale Förderkraft F überschritten wird. Auf diese Weise lassen sich Schäden am Ausbringgerät, Verunreinigungen des Gerätes infolge Behälterbruch und sonstige Gefährdungen zuverlässig verhindern.

Die in Figur 5c gezeigte anomale Lage des Tasters **42** kann auch durch Einlegen eines falschen Behälters hervorgerufen werden, der an der Stirnwand der Kappe **16'** im Bereich des Tasters **42** zu eine große Erhebung aufweist.

Das in Figur 6a bis 6c schematisch veranschaulichte Ausführungsbeispiel unterscheidet sich von dem nach Figur 5a bis 5c dadurch, daß statt des Vorsprungs **43** an der Kappe **16"** des Behälters **13** eine Reflexionsmarke **44** vorgesehen ist, die von einer einen Lichtemitter **45** und einen Lichtempfänger **46** umfassenden Lichtschranke **47** abgetastet wird.

In der in Figur 6a gezeigten Ruhelage, in der kein Behälter eingelegt ist, wird der von dem Lichtemitter **45** ausgesandte Lichtstrahl nicht oder nicht genügend reflektiert.

In der normalen Arbeitslage nach Figur 6b wird der Lichtstrahl von der Reflexionsmarke **44** auf den Lichtempfänger **46** reflektiert, dessen Ausgangssignal einer (nicht gezeigten) Auswertschaltung zugeführt wird und dadurch den Betrieb des Ausbringgerätes freigibt.

Tritt infolge Überlastung eine Verformung der Behälterkappe **16"** auf, so verläßt der von der Reflexionsmarke **44** reflektierte Lichtstrahl den Lichtempfänger **46,** so daß dieser kein Ausgangssignal mehr erzeugt. Dieser anomale Zustand wird von der Auswertschaltung erfaßt und führt zu einer Unterbrechung des Ausbringvorgangs.

Die Ausführungsbeispiel nach Figur 5a bis 5c und 6a bis 6c gestatten es somit nicht nur die Erkennung, ob ein für das Gerät bestimmter Behälter ordnungsgemäß eingelegt wurde, sondern verhindern auch Überlastzustände beim Ausbringen. Bei einigen herkömmlichen Geräten wird ein derartiger Überlastzustand durch eine eigene teuere Überlastkupplung am Antrieb verhindert, die sich bei Anwendung der Erfindung erübrigt.

## Patentansprüche

1. Misch- und Ausbringgerät für Zwei- oder Mehrkomponentenmassen mit einem Gehäuse (**10**) zur Aufnahme von die Komponenten enthaltenden, Behältern (**13**), von denen mindestens einer mit einer Markierung (**25; 31; 43; 44**) versehen ist, und einer Einrichtung zum Entleeren der Behälter (**13**) mittels synchron vorschiebbarer Kolben, wobei das Gehäuse (**10**) des Geräts eine Einrichtung (**26**) zur Erfassung der Markierung (**25; 31; 43; 44**) und zur Steuerung der Vorschubgeschwindigkeit der Kolben und/oder der Drehgeschwindigkeit des Mischerrotors (**18**) eines mit dem Misch- und Ausbringgerät oder den Behältern (**13**) verbindbaren dynamischen Mischers (**19**) in Abhängigkeit von in der Markierung enthaltenen Informationen über die in dem Behälter (**13**) gespeicherte Komponente aufweist.

2. Gerät nach Anspruch 1, wobei die Markierung (**25; 31; 43; 44**) Informationen über die Eigenschaften des Behälterinhalts, seiner Haltbarkeit oder des Herstellers enthält.

3. Gerät nach Anspruch 1, wobei die Markierung (**25; 31; 43; 44**) die Erfassung nicht nur des ordnungsgemäßen Einlegens des Behälters, sondern auch des ordnungsgemäßen Betriebs des Gerätes herangezogen wird.

4. Gerät nach Anspruch 1, das keine Überlastkupplung aufweist.

5. Gerät nach Anspruch 1, wobei es sich bei den Behältern (**13**) um Schlauchbeutel handelt, deren vordere Enden jeweils in eine steife Kappe (**16**) eingeklebt ist.

6. Gerät nach Anspruch 1, wobei die Kolben von einem Elektromotor synchron vorgeschoben werden und auf die hintere Enden der Schlauchbeutel (**15**) einwirken.

7. Gerät nach Anspruch 6, wobei der Motor eine Welle in Drehung versetzt, deren vorderes Ende mit dem Mischerrotor (**18**) des mit Kappen (**16**) der Behälter (**13**) oder einer Stirnwand (**11**) des Gehäuses (**11**) verbundenen dynamischen Mischers (**19**) gekoppelt ist.

8. Gerät nach Anspruch 7, wobei jede Kappe (**16**) einen Austrittsstutzen (20) aufweist, der in einen am hinteren Ende des Mischers (**19**) vorgesehenen Eintrittsstutzen (**21**) mündet.

9. Gerät nach einem der Ansprüche 5, 7 und 8, wobei an der Stirnseite der Kappe (**16**) ein Transponder (**25**) angeordnet ist, in dem auf den Behälter (**13**), dessen Inhalt, das Verfallsdatum des Inhalts und/oder den Hersteller bezogene Daten gespeichert sind.

10. Gerät nach Anspruch 9 mit einer Einrichtung zur Erzeugung einer Anzeige aufgrund der von dem Transponder (**25**) übertragenen Daten.

11. Gerät nach Anspruch 10, wobei die Anzeigeeinrichtung als Display am Gerät angeordnet oder als separates Bildschirmgerät gestaltet ist.

12. Gerät nach Anspruch 1, wobei es sich bei der Markierung um einen Transponder (**25**), einen Magnetcode, einen elektronischen Schaltungschip oder einen optisch lesbaren Strichcode handelt.

13. Gerät nach Anspruch 1, wobei die Markierung (**25; 31; 43; 44**) auch an dem Mischer (**19**) vorhanden ist.

14. Verwendung eines Behälters in einem Misch- und Ausbringgerät für Zwei- oder Mehrkomponentenmassen, wobei der Behälter eine Markierung (**25; 31; 43; 44**) zur Steuerung der Vorschubgeschwindigkeit von Ausbringkolben dieses Gerätes und/oder der Drehgeschwindigkeit des Mischerrotors (**18**) eines mit dem Gerät oder dem Behälter (**13**) verbindbaren dynamischen Mischers (**19**) aufweist, und wobei das Gerät ein Gehäuse (**10**) zur Aufnahme des Behälters (**13**) und eine die Markierung (**25; 31; 43; 44**) erfassende Einrichtung (**26, 33, 42, 47**) aufweist.

15. Verwendung nach Anspruch 14, wobei die Vorschubgeschwindigkeit des Ausbringkolbens in Abhängigkeit von in der Markierung enthaltenen Informationen über die in dem Behälter (**13**) gespeicherte Substanz gesteuert wird.

## Claims

1. Mixing and discharging apparatus for two-component and multi-component materials, with a housing (10) for the reception of containers (13) which contain the components at least one of which is provided with a marking (25; 31; 43; 44), having a device for emptying the containers (13) by means of synchronously advanceable pistons, the housing (10) of the apparatus having a device (26) for detecting the marking (25; 31; 43; 44) and for controlling the speed of advance of the pistons and/or the rotational speed of the mixer rotor (18) with a dynamic mixer (19), connectable to the mixing and discharging apparatus or to the containers (13), as a function of information contained in the marking and relating to the component stored in the container (13).

2. Apparatus according to Claim 1, the marking (25; 31; 43; 44) containing information relating to the properties of the container contents, of their storage life or of the manufacturer.

3. Apparatus according to Claim 1, the marking (25; 31; 43; 44) being used to detect not only the proper introduction of the container, but also the proper operation of the apparatus.

4. Apparatus according to Claim 1, which has no overload clutch.

5. Apparatus according to Claim 1, the containers (13) being tubular bags, the front end of which is in each case glued into a rigid cap (16).

6. Apparatus according to Claim 1, the pistons being advanced synchronously by an electric motor and acting on the rear ends of the tubular bags (15).

7. Apparatus according to Claim 6, the motor setting in rotation a shaft, the front end of which is coupled to the mixer rotor (18) of the dynamic mixer (19) connected to a cap (16) of the containers (13) or to an end wall (11) of the housing (10).

8. Apparatus according to Claim 7, each cap (16) having an outlet support (20) which issues into an inlet support (21) provided at the rear end of the mixer (19).

9. Apparatus according to one of Claims 5, 7 and 8, the interface of the cap (16) having arranged on it a transponder (25) in which data relating to the container (13), to its contents, to the use-by date of the contents and/or to the manufacturer is stored.

10. Apparatus according to Claim 9, with a device for generating an indication on the basis of the data transmitted by the transponder (25).

11. Apparatus according to Claim 10, the indicator device being arranged as a display on the apparatus or being designed as a separate visual display unit.

12. Apparatus according to Claim 1, the marking being a transponder (25), a magnetic code, an electronic circuit chip or an optically readable bar code.

13. Apparatus according to Claim 1, the marking (25; 31; 43; 44) also being present on the mixer (19).

14. Use of a container in a mixing and discharging apparatus for two-component or multi-component materials, the container having a marking (25, 31; 43; 44) for controlling the speed of advance of discharging pistons of this apparatus and/or the rotational speed of the mixer rotor (18) of a dynamic mixer (19) connectable to the apparatus or to the container (13), and the apparatus having a housing (10) for receiving the container (13) and a device (26, 33, 42, 47) detecting the marking (25; 31; 43; 44).

15. Use according to Claim 14, the speed of advance of the discharging piston being controlled as a function of information contained in the marking and relating to the substance stored in the container (13).

## Revendications

1. Appareil de mélange et de distribution de matières à deux composantes ou plus comprenant un boîtier (10) destiné à recevoir des récipients (13) contenant les composantes, dont au moins un est muni d'un marquage (25 ; 31 ; 43 ; 44), et un dispositif pour vider le récipient (13) au moyen de pistons pouvant être déplacés de manière synchronisée, le boîtier (10) de l'appareil présentant un dispositif (26) pour détecter le marquage (25 ; 31 ; 43 ; 44) et pour commander la vitesse d'avance des pistons et/ou la vitesse de rotation du rotor du mélangeur (18) d'un mélangeur dynamique (19) pouvant être relié avec l'appareil de mélange et de distribution ou les récipients (13) en fonction des informations contenues dans le marquage sur les composantes stockées dans le récipient (13).

2. Appareil selon la revendication 1, le marquage (25 ; 31 ; 43 ; 44) contenant des informations sur les caractéristiques du contenu du récipient, sa durabilité ou le fabricant.

3. Appareil selon la revendication 1, le marquage (25 ; 31 ; 43 ; 44) étant utilisé pour détecter non seulement l'introduction correcte du récipient, mais aussi le bon fonctionnement de l'appareil.

4. Appareil selon la revendication 1, qui ne présente par d'accouplement anti-surcharge.

5. Appareil selon la revendication 1, les récipients (13) étant des sachets tubulaires dont les extrémités avant sont à chaque fois collées dans un capuchon rigide (16).

6. Appareil selon la revendication 1, les pistons étant avancés de manière synchrone par un moteur électrique et agissant sur les extrémités arrière des sachets tubulaires (15).

7. Appareil selon la revendication 6, le moteur mettant en rotation un arbre dont l'extrémité avant est couplée avec le rotor mélangeur (18) du mélangeur dynamique (19) relié avec les capuchons (16) du récipient (13) ou une paroi frontale (11) du boîtier (10).

8. Appareil selon la revendication 7, chaque capuchon (16) présentant un manchon de sortie (20) qui débouche dans un manchon d'entrée (21) prévu à l'extrémité arrière du mélangeur (19).

9. Appareil selon l'une des revendications 5, 7 et 8, un transpondeur (25) étant disposé sur le côté frontal du capuchon (16) dans lequel sont enregistrées des données en rapport avec le récipient (13), son contenu, la date de péremption du contenu et/ou le fabricant.

10. Appareil selon la revendication 9 comprenant un dispositif pour générer une indication sur la base des données transmises par le transpondeur (25).

11. Appareil selon la revendication 10, le dispositif d'affichage étant disposé sur l'appareil sous la forme d'un afficheur ou réalisé sous la forme d'un appareil à écran séparé.

12. Appareil selon la revendication 1, le marquage étant un transpondeur (25), un code magnétique, une puce de circuit électronique ou un code à barres lisible de manière optique.

13. Appareil selon la revendication 1, le marquage (25 ; 31 ; 43 ; 44) étant également présent sur le mélangeur (19).

14. Application d'un récipient dans un appareil de mélange et de distribution de matières à deux composantes ou plus, le récipient (13) présentant un marquage (25 ; 31 ; 43 ; 44) pour commander la vitesse d'avance des pistons de distribution et/ou la vitesse de rotation du rotor du mélangeur (18) d'un mélangeur dynamique (19) pouvant être relié avec l'appareil de mélange et de distribution et l'appareil présentant un boîtier (10) pour recevoir le récipient (13) et un dispositif (26, 33, 42, 47) qui détecte le marquage (25 ; 31 ; 43 ; 44).

15. Application selon la revendication 14, la vitesse d'avance de pistons de distribution étant commandée en fonction des informations contenues dans le marquage sur la substance stockée dans le récipient (13).
